## Europäisches Patentamt
## European Patent Office
## Office européen des brevets

(19)

(11) Veröffentlichungsnummer : **0 085 344**
**B1**

(12)

# EUROPÄISCHE PATENTSCHRIFT

(45) Veröffentlichungstag der Patentschrift :
05.03.86

(51) Int. Cl.⁴ : **C 01 B 25/46**, C 01 B 25/237, C 22 B 3/00

(21) Anmeldenummer : 83100377.7

(22) Anmeldetag : 18.01.83

(54) Verfahren zur Entfernung von Schwermetallionen aus Nassverfahrensphosphorsäure.

(30) Priorität : 28.01.82 DE 3202658

(43) Veröffentlichungstag der Anmeldung :
10.08.83 Patentblatt 83/32

(45) Bekanntmachung des Hinweises auf die Patenterteilung : 05.03.86 Patentblatt 86/10

(84) Benannte Vertragsstaaten :
AT BE CH DE FR GB IT LI NL SE

(56) Entgegenhaltungen :
CHEMICAL ABSTRACTS, Band 94, Nr. 22, 1. Juni 1981, Seite 148, Nr. 177487f, Columbus, Ohio, US
CHEMICAL ABSTRACTS, Band 93, Nr. 18, 3. November 1980, Seite 483, Nr. 175529b, Columbus, Ohio, US
R. FITOUSSI u. a. : " Uranium (VI) and ruthenium extraction by dialkyldithio-phosphoric acids"
CHEMICAL ABSTRACTS, Band 97, Nr. 20, 15. November 1982, Seite 148, Nr. 165449u, Columbus, Ohio, US
CHEMICAL ABSTRACTS, Band 98, Nr. 16, 18. April 1983, Seite 134, Nr. 128629c, Columbus, Ohio, US

(73) Patentinhaber : HOECHST AKTIENGESELLSCHAFT
Postfach 80 03 20
D-6230 Frankfurt am Main 80 (DE)

(72) Erfinder : Gradl, Reinhard, Dr.
Am grünen Weg 6
D-5030 Hürth (DE)
Erfinder : Schimmel, Günther, Dr.
Ehrenstrasse 16
D-5042 Erftstadt (DE)
Erfinder : Krause, Werner, Dr.
Alleestrasse 42
D-5030 Hürth (DE)
Erfinder : Heymer, Gero, Dr.
Fasanenaue 12
D-5042 Erftstadt (DE)

**Beschreibung**

Die vorliegende Erfindung betrifft ein Verfahren zur Entfernung von Schwermetallionen, insbesondere des Cadmiums, Kupfers, Bleis und Quecksilbers, aus roher Naßverfahrensphosphorsäure. Solch eine Säure entsteht durch Aufschließen von Phosphaterz mit Schwefelsäure und Abtrennen des sich bildenden Calciumsulfats. Sie enthält neben einem breiten Spektrum kationischer Verunreinigungen je nach Herkunft des Erzes größere Mengen gelöster, emulgierter und suspendierter organischer Stoffe und wird in Fachkreisen auch als « schwarze Säure » (black acid) bezeichnet.

Für einige Anwendungen wird eine weitgehend von Schwermetallen, wie z. B. Cadmium, Kupfer, Blei und Quecksilber befreite Phosphorsäure gefordert. Die Entfernung von Schwermetallen, insbesondere von Cadmium, aus Rohphosphorsäure durch Ausfällen mittels Schwefelwasserstoff ist sehr aufwendig und technisch nur schwierig zu realisieren. Da Cadmiumsulfid in Phosphorsäure löslich ist, gelingt dessen Abtrennung nur unter speziellen Bedingungen, z. B. hohem Druck oder erhöhtem pH-Wert (vgl. JP-A-7 575 115 und Europäische Patentanmeldung 0 023 195). Eine anschließende Entgasung der Säure ist in jedem Fall erforderlich.

Eine weitere Möglichkeit der Abtrennung der Schwermetalle besteht in einer flüssig/flüssig-Extraktion der Säure. Hierbei liegen die Schwierigkeiten darin, daß in der Naßverfahrensphosphorsäure die Metallionen bereits komplex gebunden sind. In der am 26.1.1983 veröffentlichten EP-A1-0 070 415 ist bereits ein Verfahren zur flüssig/flüssig Extraktion vorgeschlagen worden, gemäß dem die Schwermetalle mittels einer Lösung eines Dialkyldithiophosphorsäureesters aus der Phosphorsäure extrahiert werden. Nachteilig bei diesem Verfahren jedoch ist, daß das Ausgangsprodukt eine sogenannte « grüne » Phosphorsäure sein muß, die frei von emulsionsbildenden organischen Verunreinigungen, also bereits vorgereinigt ist. Probleme entstehen bei einer solchen flüssig/flüssig-Extraktion ferner dadurch, daß die Trennung der beiden dabei entstehenden Phasen nur langsam und unvollkommen verläuft und dadurch emulgierter oder auch gelöster Dithiophosphorsäureester mit der Phosphorsäure ausgeschleust wird, so daß in der Regel noch eine Nachbehandlung, z. B. eine Strippung der abgetrennten Phosphorsäure zwingend erforderlich ist.

Eine sog. « schwarze », d. h. nicht vorgereinigte Phosphorsäure kann also nach dem vorgeschlagenen Verfahren nicht in befriedigender Weise gereinigt werden. Die Schwierigkeiten, die mit unzureichender Trennung von zwei flüssigen Phasen auftreten, sind bereits seit langem auch von der Uran-Extraktion aus Phosphorsäure her bekannt. Dabei ist eine Vorreinigung in Form einer Flockung, Adsorption o. ä. stets erforderlich ; wie z. B. in der Europäischen Patentanmeldung 0 016 264 beschrieben ist.

In gleicher Weise entstehen auch bei den bekannten Verfahren zur Extraktion von Uran oder von Molybdän aus Phosphorsäure mittels Dialkyldithiophosphorsäuren (« Chemical Abstracts » Vol. 94 N° 22 Seite 148, N° 177 487 f und « Chemical Abstracts » Vol. 93, N° 18, Seite 483, N° 175529 b) zwangsläufig immer zwei flüssige Phasen, die sich nur schwer und unvollkommen trennen lassen.

Aufgabe der vorliegenden Erfindung ist es, ein Verfahren bereitzustellen, daß es ermöglicht, in einfacher Weise und in einem Verfahrensschritt Schwermetallionen, insbesondere solche des Cadmiums, Kupfers, Bleis und Quecksilbers, aus Naßverfahrensphosphorsäure zu entfernen, indem man letztere mit einem Diorganyldithiophosphorsäureester in Kontakt bringt. Dabei wird eine rohe Naßverfahrensphosphorsäure eingesetzt, die man entweder mit einem Gemisch, bestehend aus einem Adsorptionsmittel und dem Ester oder nach einer Vorbehandlung mit dem Ester, anschließend mit dem Adsorptionsmittel allein in Kontakt bringt, wobei das Adsorptionsmittel jeweils in einer solchen Menge verwandt wird, die ausreicht, den eingesetzten Ester völlig zu adsorbieren. Die gereinigte Phosphorsäure wird dann anschließend von der aus dem Ester und dem Adsorptionsmittel bestehenden festen Phase abgetrennt.

Vorzugsweise verwendet man als Adsorptionsmittel Aktivkohle, Ruß, poröse Harze oder Silikate, insbesondere Zeolithe, während sich als Diorganyldithiophosphorsäureester vor allem solche der allgemeinen Formel $(RO)_2PSSH$ eignen, in der R substituierte oder nichtsubstituierte Alkyl-, Cycloalkyl-, Alkylaryl-, Aryl- oder Aralkylgruppen mit 1 bis 24 C-Atomen, vorzugsweise 4 bis 18 C-Atomen bedeutet.

Es empfiehlt sich, die Phosphorsäure bei Temperaturen zwischen 10 und 100 °C mit dem Ester und dem Adsorptionsmittel in Kontakt zu bringen.

Die aus dem Adsorptionsmittel und dem Ester bestehende Mischung läßt sich am besten herstellen, wenn man das Adsorptionsmittel mit dem flüssigen Ester tränkt, wobei Ester, die bei Zimmertemperatur fest sind, geschmolzen werden. Diese Mischungen sind fest und rieselfähig. Dadurch kann die gereinigte Säure leicht durch Dekantieren, Filtrieren oder Flotieren von der Mischung abgetrennt werden.

Die Komponenten Diorganyldithiophosphorsäureester und Adsorptionsmittel können aber auch sukzessive der Phosphorsäure zugefügt werden. Nach der Behandlung läßt man das Feststoffgemisch absitzen und trennt dann die überstehende Säure in der angegebenen Weise ab.

Die Dosierung von Dithioester und Adsorptionsmittel kann in einem weiten Bereich variiert werden, jedoch ist es aus Kostengründen wünschenswert, die Einsatzmengen so gering wie möglich zu halten.

Das Verhältnis von Ester zu Adsorptionsmittel ergibt sich aus der maximalen Flüssigkeitsaufnahme des Adsorptionsmittels, jedoch kann auch eine niedrigere als die maximale Beladung des Adsorptionsmittels gewählt werden.

2

Je nach Provenienz der Rohsäure können die benötigten Wirkstoffmengen schwanken und müssen deshalb individuell in Vorversuchen ermittelt werden.

Es genügt im allgemeinen, wenn der Ester in einer 2 bis 5 molaren Menge, bezogen auf die zu entfernenden Schwermetallionen, und das Adsorptionsmittel in einer Menge von 0,05 bis 1 Gew.%, bezogen auf die Phosphorsäuremenge eingesetzt wird.

Wie schon erwähnt, kann man erfindungsgemäß als Ausgangsprodukt eine rohe Naßverfahrensphosphorsäure einsetzen und zwar sogar solche, die einen $P_2O_5$-Gehalt von 3 bis 80 Gew.% und einen Gehalt an organischen Substanzen von 0,02 bis 0,8 Gew.% besitzen, bezogen auf $P_2O_5$ und berechnet als organisch gebundener Kohlenstoff.

Die in technischem Maßstab am häufigsten eingesetzten Säuren sind solche mit Konzentrationen von ca. 30 und ca. 52 % $P_2O_5$. Aufgrund der unterschiedlichen Dichten und Viskositäten kann für die erste Säure eine Dekantation ausreichend sein, während man bei der konzentrierten Säure bevorzugt eine Filtration durchführen wird.

Als Adsorptionsmittel ist jeder Stoff geeignet, der in der Lage ist, eine genügend große Menge von Diorganyldithiophosphorsäureester an seiner Oberfläche fest zu binden, so daß nach der Schwermetallentfernung die in der Phosphorsäure verbliebene gelöste emulgierte Menge an Thioester praktisch gleich null ist. Solche Adsorptionsmittel sind z. B. Pulveraktivkohlen, Kornaktivkohlen oder auch Ruße, wie sie entstehen bei der Pyrolyse von Acetylen oder bei der Schweröldruckvergasung in Gegenwart von sauerstoffhaltigen Gasen. Besonders haben sich auch Silikate, insbesondere Alumosilikate wie Zeolithe bewährt.

Bei einer sukzessiven Dosierung von Thioester und Adsorptionsmittel sollte die Menge an Adsorptionsmittel etwa gleich groß sein wie die an Thioester. Auch hier ist individuell zu ermitteln, welche Menge Adsorptionsmittel benötigt wird, damit die Phosphorsäure nach der Reinigung frei von Thioester-Resten ist.

Eine weitere bevorzugte Ausführungsform der vorliegenden Erfindung verwendet die Perkolationstechnik. In diesem Fall wird ein grobkörniges Adsorptionsmittel, z. B. Kornaktivkohle oder kompaktierter Ruß, mit einem flüssigen Diorganyldithiophosphorsäureester getränkt und diese Mischung in eine Säule gefüllt. Sodann wird die zu reinigende Phosphorsäure über das Adsorberbett geleitet, wobei Cadmium und andere Metalle auf der Säule haften bleiben. Eine regenerierende Strippung des Adsorberbettes ist beispielsweise mit konzentrierter Salzsäure möglich.

Zusammenfassend können folgende Vorteile des erfindungsgemäßen Verfahrens hervorgehoben werden :

1. Es kann eine schwarze, unvorbehandelte Rohphosphorsäure mit praktisch beliebiger $P_2O_5$-Konzentration in die Reinigung eingesetzt werden.

2. Die Reinigung kann in einem einzigen, einfachen Verfahrensschritt durchgeführt werden, eine Nachbehandlung, z. B. eine Strippung der Phosphorsäure, ist nicht erforderlich.

3. Der Einsatz an Reagenzien ist gering, insbesondere braucht die Diorganyldithiophosphorsäureester-Menge nur wenig über der zur Entfernung der entsprechenden Kationen notwendigen Menge zu liegen.

4. Die Rohphosphorsäure erfährt durch die Behandlung mit dem Adsorptionsmittel und die damit verbundene Abreicherung an organischen Verunreinigungen zusätzlich eine Wertsteigerung.

In den nachstehenden Beispielen soll die Erfindung näher erläutert werden :


Beispiele 1-7


Durch Verkneten von festem Adsorptionsmittel und flüssigem bzw. aufgeschmolzenem Diorganyldithiophosphorsäureester werden die in Tabelle 1 aufgeführten festen, körnigen Mischungen hergestellt. Jeweils eine solche Menge dieser Gemische wird in eine an $P_2O_5$ 30 %ige Rohphosphorsäure (Beispiele 1-6 Khouribga-Phosphorsäure mit 16 ppm Cd, 33 ppm Cu, 0,1 ppm Pb, 0,005 ppm Hg, 350 ppm $C_{org}$; Beispiel 7 Florida-Phosphorsäure mit 8 ppm Cd, 12 ppm Cu, 0,2 ppm Pb, 0,014 ppm Hg und 1 000 ppm $C_{org}$) eingerührt, daß sich die in der Tabelle angegebenen Prozentgehalte von Thioester, bezogen auf die Gesamtmenge an Säure ergeben. Nach fünfzehn minütigem Rühren bei Raumtemperatur wird über ein Druckfilter (8 μm Porengröße) abfiltriert und der Cd, Cu, Pb, Hg und $C_{org}$-Gehalt im Filtrat bestimmt, wobei für Pb jeweils < 0,05 ppm und für Hg 0,001 ppm gefunden wurden.


Beispiele 8-12


In eine schwarze Khouribga- (Beispiel 8-11) bzw. Florida- (Beispiel 12) Rohphosphorsäure wird die in Tabelle 2 angegebene Menge an Dialkyldithiophosphorsäure 15 Minuten lang eingerührt, das Gemisch sodann mit der in Tabelle 2 aufgeführten Menge und Art an Adsorptionsmittel ebenfalls 15 Minuten verrührt und die Mischung sodann über ein Membran-Druckfilter filtriert. Im klaren Filtrat wird Cadmium, Kupfer, Blei, Quecksilber und organischer Kohlenstoff bestimmt. Der Gehalt an Cd beträgt jeweils < 0,05 ppm, der an Hg 0,001 ppm.

3

## Beispiel 13

Eine Kornaktivkohle wird mit 71 Gew.% Di-2-(ethylhexyl) dithiophosphorsäure getränkt und diese Mischung in eine 30 cm hohe Glassäule, Durchmesser 3 cm, eingefüllt. Man läßt eine an $P_2O_5$ 30 %ige Marokko-Rohphosphorsäure (16 ppm Cd) mit einer Tropfgeschwindigkeit von ca. 1 Bettvolumen/Std. über die Säule laufen und mißt nach 0,5 l, 1 l, 1,5 l und 2 l Durchfluß den Cadmiumgehalt im Ablauf ; er beträgt jeweils < 1 ppm Cd.

In den Beispielen wurden Aktivkohlen verwendet, die durch die nachgenannten BET-Oberflächen charakterisiert sind :

Beispiel 3 und 13 : 1 000-1 100  $m^2/g$
Beispiel 8, 9, 10 und 12 : > 1 500  $m^2/g$

(Siehe Tabelle 1 Seite 5 f.)

Tabelle 1

| Bei-spiel | Adsorptionsmittel | R in $(RO)_2PS_2H$ | % $(RO)_2PS_2H$ im Wirkstoffgemisch | % Thioester/ Phosphorsäure | ppm im Filtrat | | | |
|---|---|---|---|---|---|---|---|---|
| | | | | | Cd | Cu | $C_{org.}$ | Abreiche-rung $C_{org.}$ |
| 1 | Ruß* 1500-2000°C | 2-Ethylhexyl | 22,5 | 0,3 | <1 | <1 | 130 | 63 % |
| 2 | Ruß* 500- 700°C | Phenyl | 80,5 | 0,3 | 3 | <1 | 200 | 43 % |
| 3 | Pulveraktivkohle | Phenyl | 62,8 | 0,3 | 3 | <1 | 240 | 22 % |
| 4 | Ruß* 1500-2000°C | Phenyl | 55,6 | 0,4 | 4 | 1 | 240 | 22 % |
| 5 | Acetylenruß | 2-Ethylhexyl | 42,4 | 0,4 | 3 | 1 | 160 | 55 % |
| 6 | Zeolith A | 2-Ethylhexyl | 18,7 | 0,2 | <1 | <1 | 150 | 47 % |
| 7 | Ruß* 1500-2000°C | 2-Ethylhexyl | 22,5 | 0,3 | <1 | <1 | 640 | 46 % |

* Unter Ruß ist ein Produkt zu verstehen, das bei der Schweröldruckvergasung mit sauerstoffhaltigen Gasen entsteht und das bei den angegebenen Temperaturen thermisch nachbehandelt ist.

Tabelle 2

| Bei-spiel | Adsorptionsmittel | R in $(RO)_2PS_2H$ | % $P_2O_5$ in Rohsäure | % Thioester/ Phosphorsäure | % Adsorptions-mittel/$H_3PO_4$ | ppm im Filtrat | | | |
|---|---|---|---|---|---|---|---|---|---|
| | | | | | | Cd | Cu | $C_{org.}$ | Abrei-cherung $C_{org.}$ |
| 8 | Pulveraktivkohle | 2-Ethylhexyl | 30 | 0,2 | 0,1 | <1 | <1 | 80 | 77 % |
| 9 | Pulveraktivkohle | $n-C_{14}$ | 30 | 0,2 | 0,1 | 2 | <1 | 100 | 65 % |
| 10 | Pulveraktivkohle | 2-Ethylhexyl | 52 | 0,2 | 0,2 | 2 | <1 | 180 | 49 % |
| 11 | Ruß* 500 - 700° C | 2-Ethylhexyl | 30 | 0,2 | 0,1 | <1 | <1 | 50 | 86 % |
| 12 | Pulveraktivkohle | 2-Ethylhexyl | 30 | 0,2 | 0,2 | <1 | <1 | 490 | 51 % |

* Unter Ruß ist ein Produkt zu verstehen, das bei der Schweröldruckvergasung mit sauerstoffhaltigen Gasen entsteht und das bei den angegebenen Temperaturen thermisch nachbehandelt ist.

**Patentansprüche**

1. Verfahren zur Entfernung von Schwermetallionen, insbesondere von Ionen des Cadmiums, Kupfers, Bleis und Quecksilbers, aus Naßverfahrensphosphorsäure, indem man letztere mit einem Diorganyldithiophosphorsäureester in Kontakt bringt, dadurch gekennzeichnet, daß man eine rohe Naßverfahrensphosphorsäure entweder mit einem Gemisch, bestehend aus einem Adsorptionsmittel und dem Ester, oder nach einer Vorbehandlung mit dem Ester, anschließend mit dem Adsorptionsmittel allein in Kontakt bringt, wobei das Adsorptionsmittel jeweils in einer solchen Menge verwandt wird, die mindestens ausreicht, den eingesetzten Ester völlig zu adsorbieren und daß man anschließend die gereinigte Phosphorsäure von der aus dem Ester und dem Adsorptionsmittel bestehenden festen Phase abtrennt.

2. Verfahren nach Anspruch 1, dadurch gekennzeichnet, daß man als Adsorptionsmittel Aktivkohle, Ruß, poröse Harze oder Silikate verwendet.

3. Verfahren nach Anspruch 1 oder 2, dadurch gekennzeichnet, daß man Diorganyldithiophosphorsäureester der allgemeinen Formel $(RO)_2PSSH$ einsetzt, in der R substituierte oder nichtsubstituierte Alkyl-, Cycloalkyl-, Alkylaryl-, Aryl- oder Aralkylgruppen mit 1 bis 24 C-Atomen bedeutet.

4. Verfahren nach einem der Ansprüche 1 bis 3, dadurch gekennzeichnet, daß man die Phosphorsäure bei Temperaturen zwischen 10 und 100 °C mit dem Ester und dem Adsorptionsmittel in Kontakt bringt.

5. Verfahren nach einem der Ansprüche 1 bis 4, dadurch gekennzeichnet, daß man die aus dem Adsorptionsmittel und dem Ester bestehende Mischung herstellt, indem man das Adsorptionsmittel mit dem flüssigen Ester tränkt, wobei Ester, die bei Zimmertemperatur fest sind, vorher aufgeschmolzen werden.

6. Verfahren nach einem der Ansprüche 1 bis 5, dadurch gekennzeichnet, daß der Ester in einer 2 bis 5 molaren Menge, bezogen auf die zu entfernenden Schwermetallionen, eingesetzt wird.

7. Verfahren nach einem der Ansprüche 1 bis 6, dadurch gekennzeichnet, daß das Adsorptionsmittel in einer Menge von 0,05 bis 1 Gew.%, bezogen auf die Phosphorsäuremenge, eingesetzt wird.

8. Verfahren nach einem der Ansprüche 1 bis 7, dadurch gekennzeichnet, daß man als Ausgangsprodukt eine rohe Naßverfahrensphosphorsäure einsetzt, die einen $P_2O_5$-Gehalt von 3 bis 80 Gew.% und einen Gehalt an organischen Substanzen von 0,02 bis 0,8 Gew.% besitzt, bezogen auf $P_2O_5$ und berechnet als organisch gebundener Kohlenstoff.

**Claims**

1. Process for removing heavy metal ions, especially cadmium, copper, lead and mercury ions from wet-process phosphoric acid by contacting this latter with a diorganyldithiophosphoric acid ester, which comprises : contacting crude wet-process phosphoric acid either with a mixture consisting of an adsorbent and the ester or, after treatment with the ester, contacting the acid with the adsorbent alone, the adsorbent being in each case used in a quantity sufficient for completely adsorbing the ester used, and separating the purified phosphoric acid from the solid phase consisting of the ester and adsorbent.

2. Process as claimed in claim 1, wherein active carbon, carbon black, a porous resin or silicate is used as the adsorbent.

3. Process as claimed in claim 1, wherein a diorganyldithiophosphoric acid ester of the general formula $(RO)_2PSSH$, in which R stands for a substituted or unsubstituted alkyl, cycloalkyl, alkylaryl, aryl or aralkyl group having from 1 to 24 carbon atoms is used.

4. Process as claimed in any of claims 1 to 3, wherein the phosphoric acid is contacted with the ester and adsorbent at temperatures between 10 and 100 °C.

5. Process as claimed in any of claims 1 to 4, wherein the mixture consisting of adsorbent and ester is prepared by impregnating the adsorbent with the liquid ester, those esters which are solid at room temperature being first fused.

6. Process as claimed in any of claims 1 to 5, wherein the ester is used in a 2 to 5 molar quantity, based on the heavy metal ions to be removed.

7. Process as claimed in any of claims 1 to 6, wherein the adsorbent is used in a quantity of 0.05 to 1 weight %, based on the quantity of phosphoric acid.

8. Process as claimed in any of claims 1 to 7, wherein the feed material is crude wet-process phosphoric acid containing 3 to 80 weight % $P_2O_5$ and 0.02 to 0.8 weight % organic substances, based on $P_2O_5$ and calculated as organically combined carbon.

**Revendications**

1. Procédé pour éliminer les ions de métaux lourds, en particulier les ions de cadmium, de cuivre, de plomb et de mercure, de l'acide phosphorique du procédé humide par mise en contact de ce dernier avec un ester d'acide diorganyldithiophosphorique, caractérisé en ce que l'on met l'acide phosphorique brut du procédé humide en contact soit avec un mélange constitué par un agent absorbant et l'ester, soit après traitement par l'ester, avec l'agent adsorbant, seul ce dernier étant chaque fois utilisé en quantité suffisante pour adsorber complètement l'ester utilisé, et on sépare ensuite l'acide phosphorique purifié de la phase solide constituée par l'ester et l'agent adsorbant.

2. Procédé selon la revendication 1, caractérisé en ce que l'on utilise en tant qu'agent adsorbant du charbon actif, du noir de carbone, des résines poreuses ou des silicates.

3. Procédé selon la revendication 1 ou 2, caractérisé en ce que l'on utilise des esters d'acides diorganyldithiophosphoriques de formule générale $(RO)_2PSSH$ dans laquelle R représente des groupes alkyle, cycloalkyle, alkylaryle, aryle ou aralkyle en $C_1$-$C_{24}$ substitués ou non.

4. Procédé selon l'une quelconque des revendications 1 à 3, caractérisé en ce que l'on met l'acide phosphorique en contact avec l'ester et l'agent absorbant à des températures de 10 à 100 °C.

5. Procédé selon l'une quelconque des revendications 1 à 4, caractérisé en ce que l'on prépare le mélange consistant en l'agent adsorbant et l'ester en imprégnant l'agent adsorbant par l'ester liquide, les esters solides à la température ambiante étant fondus au préalable.

6. Procédé selon l'une quelconque des revendications 1 à 5, caractérisé en ce que l'on utilise l'ester en quantité 2 à 5 fois molaire, par rapport aux ions de métaux lourds à éliminer.

7. Procédé selon l'une quelconque des revendications 1 à 6, caractérisé en ce que l'on utilise l'agent adsorbant en quantité de 0,05 à 1 % du poids de l'acide phosphorique.

8. Procédé selon l'une quelconque des revendications 1 à 7, caractérisé en ce que l'on part d'un acide phosphorique brut du procédé humide contenant de 3 à 80 % en poids de $P_2O_5$ et d'une teneur en substances organiques de 0,02 à 0,8 % en poids, exprimée en carbone organiquement lié et rapportée à $P_2O_5$.